Europäisches Patentamt

European Patent Office

Office européen des brevets

(19)

(11) Numéro de publication: **0 128 989**
**B1**

(12) **FASCICULE DE BREVET EUROPEEN**

(45) Date de publication du fascicule du brevet: 20.05.87

(51) Int. Cl.⁴: **E 04 H 9/00, E 04 H 9/12**

(21) Numéro de dépôt: **83401280.9**

(22) Date de dépôt: **21.06.83**

(54) **Construction enterrée constituant une enceinte de protection et procédé pour la réalisation d'une telle construction.**

(43) Date de publication de la demande:
**27.12.84 Bulletin 84/52**

(45) Mention de la délivrance du brevet:
**20.05.87 Bulletin 87/21**

(84) Etats contractants désignés:
**AT BE CH DE FR GB IT LI LU NL SE**

(56) Documents cités:
CH-A- 191 607
DE-C- 690 621
DE-U-1 938 872
DE-U-8 226 827
FR-A- 808 884
FR-A- 857 011
US-A-1 642 559

(73) Titulaire: **Harnois, Georges Albert René**
**22, rue des Pâquerettes**
**F-91540 Mennecy (FR)**

(72) Inventeur: **Harnois, Georges Albert René**
**22, rue des Pâquerettes**
**F-91540 Mennecy (FR)**

(74) Mandataire: **Bonnetat, Christian et al**
**Cabinet PROPI Conseils 23 rue de Léningrad**
**F-75008 Paris (FR)**

Courier Press, Leamington Spa, England.

EP 0 128 989 B1

## Description

La présente invention concerne une construction du type enterré destinée à réaliser une enceinte ou chambre refermée accessible par une ouverture supérieure et apte à constituer un aubri ou enceinte de protection contre les sources d'agressions extérieures, selon le préambule de la revendication 1.

L'invention permet de réaliser un abri à vocations multiples et permettant d'assurer la protection des personnes et des biens contre des sources d'agression résultant de conflits (bombardements, explosions, incendies) ou encore en cas de catastrophes naturelles (tremblement de terre, cyclones).

L'invention permet par ailleurs de constituer un local d'entrepôt susceptible de conserver des produits et denrées stockés soit pour l'usage quotidien, soit en vue de constituer des réserves utilisables dans le cas de circonstances troublées interrompant l'approvisionnement des utilisateurs.

L'invention permet de réaliser ici un local de survie permettant aux utilisateurs d'attendre dans des conditions assurant en priorité la protection physique des personnes, l'éloignement ou la disparition des dangers constituant une menace pour leur sécurité.

On connaît par le brevet allemand 690 621 un local répondant à un besoin et formé par la superposition de viroles cylindriques; la construction en est aisée, par simple empilement, mais ces viroles sont lourdes et nécessitent des engins de levage; de plus la forme du local est déterminée une fois pour toute et l'on n'obtient pas une construction monolithique de haute résistance.

L'invention permet de réaliser automatiquement et par simple empilement les parois d'un local enterré de forme générale allongée notamment ovoïdale ladite paroi étant associée à une structure monolithique de haute résistance, ce travail étant réalisable sans engin, par une seule personne.

A cet effet, l'invention concerne une construction enterrée définissant une enceinte fermée en vue de la protection des biens et/ou de personnes contre les sources d'agression extérieures, la construction étant constituée d'au moins une dalle inférieure constituant l'assise et d'une superposition d'éléments constitués de caissons, lesdits éléments conformant une paroi fermée sur elle-même en forme générale d'un cylindre à base ovale ou elliptique et la construction est caractérisée en ce que lesdits caissons sont ouverts par leur face orientée vers l'intérieur de l'enceinte en constituant ainsi chacun un casier de rangement et en ce que lesdits caissons sont de deux types, les caissons d'un premier type définissant par leur juxtaposition un pan de paroi courbe de rayon de courbure donnée, et les caissons du second type définissant par leur juxtaposition un pan de paroi courbe comportant un rayon de courbure plus long (par rapport au pan réalisé à partir des caissons du premier type), l'enceinte étant constituée de la juxtaposition de quatre pans soit deux pans de rayon de courbure plus court et deux pans de rayon de courbure plus long, les pans d'un même rayon de courbure étant réalisés avec des caissons d'un même type, étant diamètralement opposés et séparés par deux pans de rayon de courbure différents. L'invention concerne également un procédé en vue de réalisation du local ci-dessus et ce procédé est caractérisé par la succession des opérations suivantes:

a) on creuse dans le sol une excavation de forme générale cylindrique à directrice ovale,

b) on coule dans le fond de ce volume ainsi creusé après mise en place d'un radier d'armature une chappe en béton constituant le plancher ou l'assise de la construction,

c) on laisse en même temps déborder vers le haut des fers d'attente sur la périphérie de ladite dalle aux endroits convenables et devant constituer la base du coffrage perdu pour l'érection des piliers verticaux,

d) on assemble les caissons formant par leur superposition la paroi verticale refermée sur elle-même de l'enceinte et à cet effet on met en place les rangées superposées de caissons, chaque rangée comportant des caissons d'un premier type conformant par leur juxtaposition deux pans de parois de rayons de courbure plus faible et entre lesquelles prennent place les caissons du second type conformant par leur assemblage deux pans de parois de rayon de courbure plus grand, chaque pan d'un rayon de courbure déterminé étant inséré entre deux autres pans d'un rayon de courbure différent,

e) on dispose, lors de la superposition des caissons de la phase d) précédente, des caissons comportant entre leur face latérale venant en regard, une capacité, lesdites capacités se superposant d'un étage à l'autre pour conformer une cheminée de hauteur égale à la hauteur de la construction en constituant un coffrage perdu, les fers d'attente solidaires de la dalle ou assise ayant été positionnée pour s'engager à la base dudit coffrage,

f) on coule dans ledit coffrage perdu du béton après mise en place de fers d'armature verticaux débordant au sommet dudit coffrage,

g) on met en place un panneau horizontal au niveau du sommet des parois verticales et constituant un coffrage pour la coulée d'une dalle supérieure,

h) on coule dans ledit coffrage la dalle constituant le plafond de la construction faisant prise sur les fers d'attente débordant, en laissant une solution de continuité dans la dalle supérieure pour conformer une ouverture d'accès au sein de l'enceinte,

i) on met en place l'organe d'accès constituant un escalier par exemple par superposition des manchons d'extrémité l'extrémité opposée de chaque marche reposant en appui sur la face horizontale des casiers appartenant au premier pan (de plus faible rayon) et récepteur de la cage d'escalier.

D'autres caractéristiques avantageuses de l'invention sont illustrées dans les revendications dépendants.

D'autres caractéristiques et avantages de l'invention ressortiront encore de la description qui suit et qui est donnée en rapport avec une forme de réalisation particulière présentée à titre d'exemple non limitatif et en se référant aux dessins annexés.

La figure 1 représente une vue en plan avec coupe partielle de l'enceinte de prospection selon l'invention.

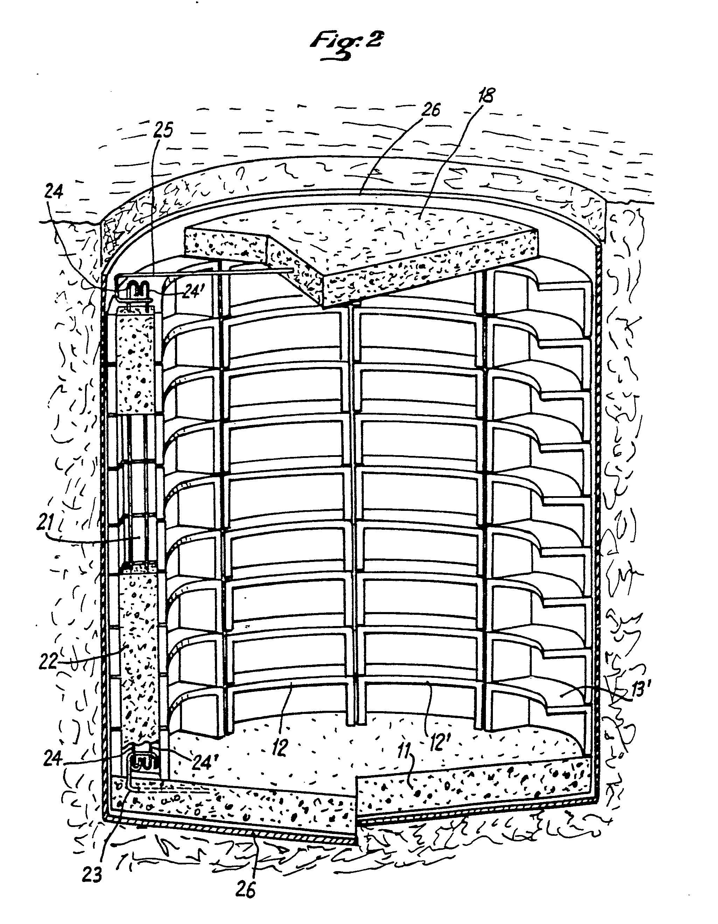

La figure 2 représente une vue en perspective à partir d'une coupe selon la ligne 2.2. de la ligne 1.

La figure 3 représente une vue en perspective du côté opposé de l'enceinte et comportant la cage d'escalier.

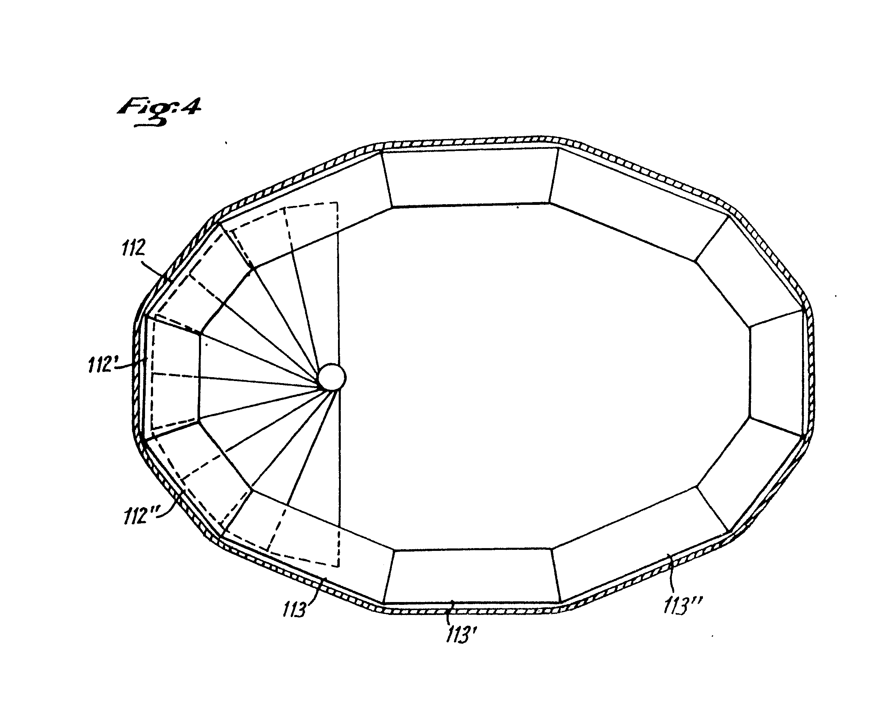

La figure 4 représente une variante dans laquelle les éléments sont de forme trapézoïdale.

La figure 5 représente une vue de détail et en coupe horizontale partielle de l'abri.

La figure 6 représente une vue en coupe partielle d'une variante avec renforcement extérieur en béton.

La figure 7 représente une vue en coupe horizontale de la variante de la ligne 6.

La figure 8 représente une vue en plan d'une marche préfabriquée selon une forme particulière de réalisation.

La figure 9 représente une vue en perspective d'une partie d'escalier en colimaçon montée en appui sur les casiers et utilisant une marche selon la variante de la figure 8.

Selon l'ensemble des figures, l'enceinte est constituée d'un volume cylindrique à base ovoïdale, l'enceinte comportant une paroi refermée sur elle-même est divisée en deux premiers pans 15, 15' de plus faible rayon de courbure et deux seconds pans 14, 14' de plus grand rayon de courbure, les pans étant accordés entre eux et diamétralement opposés deux à deux.

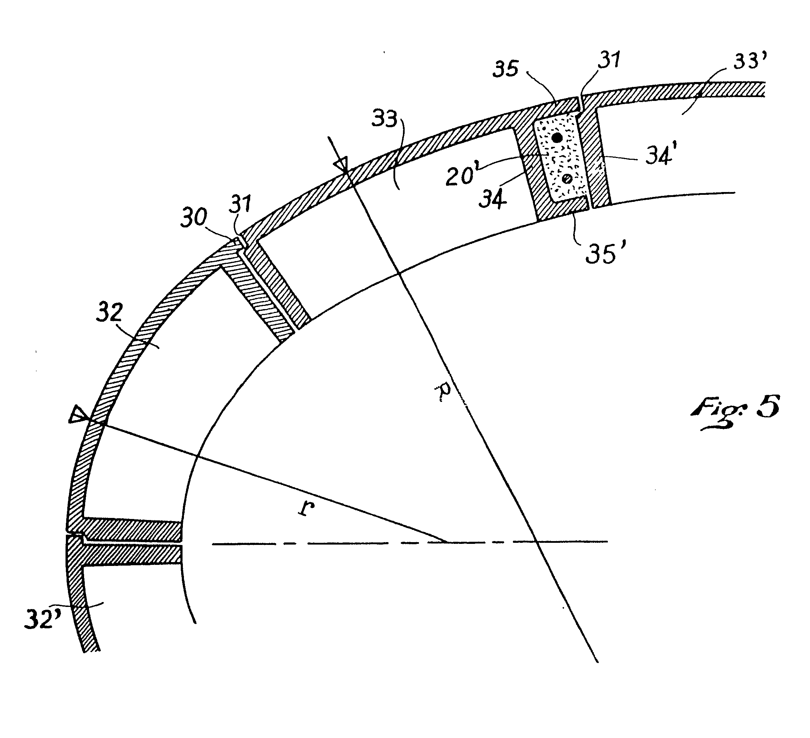

Les premiers pans sont constitués d'éléments préfabriqués superposés et formés de caissons 12, 12' en arc de cercle et de rayon de courbure correspondant à celui du panneau qu'il compose (Rayons R et r figure 5).

Les deux seconds pans 14, 14' sont constitués d'éléments préfabriqués en forme de caissons 13, 13', 13'' 13''', de même hauteur que les caissons 12 et 12' afin de permettre de réaliser des étages successifs égaux entre eux, et les caissons 13, 13' sont également en arc de cercle et comportent un rayon de courbure plus large correspondant au rayon de courbure du pan 14, 14' qu'ils composent.

Les caissons sont mis en place sur une assise 11 formée d'une dalle ou chape de béton coulée sur place sur un radier d'armature.

L'ensemble est mis en place dans une ouverture de forme correspondante et définissant un volume ovoïdale creusé dans le sol sensiblement à la dimension du volume extérieur de l'enceinte.

Avantageusement, on peut entourer l'enceinte ainsi réalisée d'un matériau d'isolation, par exemple une poche 26 en matériau résistant et imperméable, par exemple en caoutchouc synthétique tel que le butyl, cette poche permettant d'éviter les infiltrations d'eau; en effet, les caissons sont superposés à sec et viennent s'emboîter grâce à un élément mâle 30 débordant sur l'arrière d'une face latérale, et cet élément débordant mâle 30 vient s'emboîter dans une encoche réceptrice femelle 31 qui est située en regard sur la face opposée du caisson adjacent.

Les caissons 13, 13', 13''' composant les pans 14, 14' ou second pan de plus grand rayon de courbure, sont avantageusement constitués de façon que leur face latérale 19, 19' définisse, lorsque les caissons sont en position adjacente, en espace intérieur 20.

Par la superposition des caissons on obtient, par superposition des espaces 20, une cheminée 21 qui parcourt verticalement la hauteur de la construction.

On a prévu, à l'aplomb de cette cheminée 21 des extrémités des fers d'armature 23 venus de la chape ou assise inférieure 11.

Des fers d'armature 24, 24' sont mis en place dans la cheminée et on coule ainsi un pilier vertical 22 formant une structure monolithique avec l'assise 11.

L'ensemble est surmonté par la dalle 18 qui est coulée sur un coffrage mis en place spécialement au sommet des parois, et cette dalle comporte également des fers d'armature 25 qui coopérent avec les fers 24, 24' des piliers verticaux 22, débordant par rapport au sommet des piliers 22 en venant ainsi liaisonner lesdits piliers avec la chape supérieure 18, de sorte que l'assise, les piliers verticaux et la chappe supérieure sont ainsi solidaires et forment une structure monobloc.

On obtient ainsi un ensemble particulièrement résistant.

En effet, l'enceinte selon l'invention allie la résistance provenant d'une structure monobloc décrite ci-dessus aux caractéristiques de résistance d'une structure ovoïdale toute poussée exercée latéralement, en un point quelconque de la paroi verticale rencontre un effet de voute et la poussée est répercutée intégralement par la paroi opposée sur le sol environnant en s'opposant à toute rupture ou tout affaissement des parois.

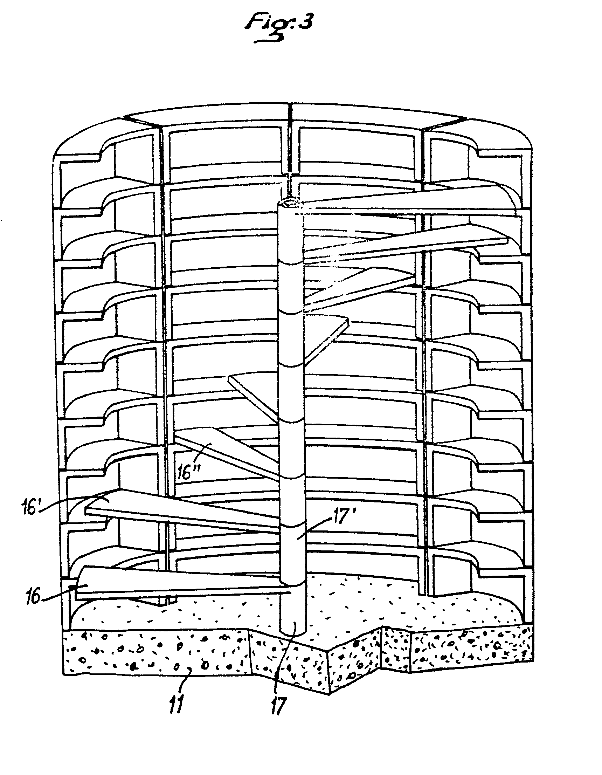

Ainsi qu'on le voit sur la figure 3, un pan, de préférence le pan 15 de rayon de courbure plus petit, est occupé par une cage d'escalier en colimaçon réalisée par simple superposition de marches de type connu en soi, préfabriquées et comportant à une extrémité un manchon creux; les manchons sont gerbales et viennent donc s'ampiler; ils sont de hauteur correspondante à la hauteur des casiers de sorte que chaque marche vient prendre appui par son manchon sur le manchon inférieur, l'extrémité opposée de la marche 16, 16', 16'', venant en appui sur la face horizontale d'un casier situé à l'étage correspondant.

On réalise ainsi de façon simple et sans mise en place de structure complexe un escalier que peut être par exemple scellé, l'extrémité libre des marches étant scellées sur la paroi horizontale supérieure du caisson d'appui.

L'ensemble peut être mis en place en tout endroit, par exemple dans un jardin, un parc etc... la dalle 18 étant alors recouverte d'une surface ou film d'étanchéité venant déborder par rapport à la poche 26.

L'accès à l'intérieur de l'espace constituant l'enceinte de protection est formé par une trappe sensiblement au droit des marches supérieures de l'escalier et permettant d'accéder à l'intérieur de l'enceinte.

L'enceinte peut également être mise en place sous un local principal ou secondaire (garage, remise, cellier etc. . .) et dans ce cas la chape 18 se prolonge vers l'extérieur pour constituer le sol de ce local.

L'espace intérieur de l'enceinte permet des aménagements divers; les casiers superposés permettent de recevoir des provisions en quantité très importante, le volume de rangement étant considérable et occupant toute la surface des parois périphériques; on peut ainsi mettre en place des accessoires, équipements de survie, outre des aliments et provisions ainsi que tout matériel ou équipement permettant d'assurer le séjour pendant une période de temps définie à l'intérieur de l'enceinte, dans des conditions de confort limitées mais permettant au moins d'assurer la protection physique et la survie des personnes en place dans le local; ce dernier pourra être complété par tout dispositif ou équipement, accessoire, par exemple dispositif d'aération avec insertion de filtres, dispositif d'évacuation ou de destruction chimique des déchets, d'éjections ou immondices, la trappe d'accès pourra éventuellement être munie de dispositifs de verrouillage et d'étanchéité.

La figure 3 montre une forme de réalisation de la construction enterrée selon l'invention dans laquelle les caissons sont de forme trapézoïdale en plan; et on y trouve des caissons d'un premier type 112, 112', 112'' conformant le pan de faible rayon et des caissons d'un second type 113, 113', 113'' conformant le second pan de courbure moins prononcée, l'ensemble retrouvant un plan polygonal de profil général ovoïdale angulaire.

La figure 5 montre une vue en coupe horizontale partielle montrant la juxtaposition de casiers 32, 32' du premier type et de plus faible rayon raccordés aux pans des casiers 33, 33' de second type et de rayon plus grand.

Dans cette disposition les casiers du second type sont les casiers prévus avec une face latérale 34 se prolongeant par deux ailes 35, 35' l'ensemble formant un U dirigé vers la face latérale 34' du caisson adjacent 33'.

Chaque caisson comporte une encoche ou épaulement 31 réceptrice de l'élément mâle 30 débordant depuis la paroi de l'élément juxtaposé ce qui permet un emboîtement et une imbrication des caissons; dans le cas du caisson 33, l'aile extérieure 35 est légèrement débordante par rapport à l'axe radial correspondant à l'extrémité de l'aile 35', de sorte que l'extrémité de l'aile 35 joue le rôle de l'élément mâle venant s'emboîter dans l'encoche réceptrice 31 du caisson adjacent.

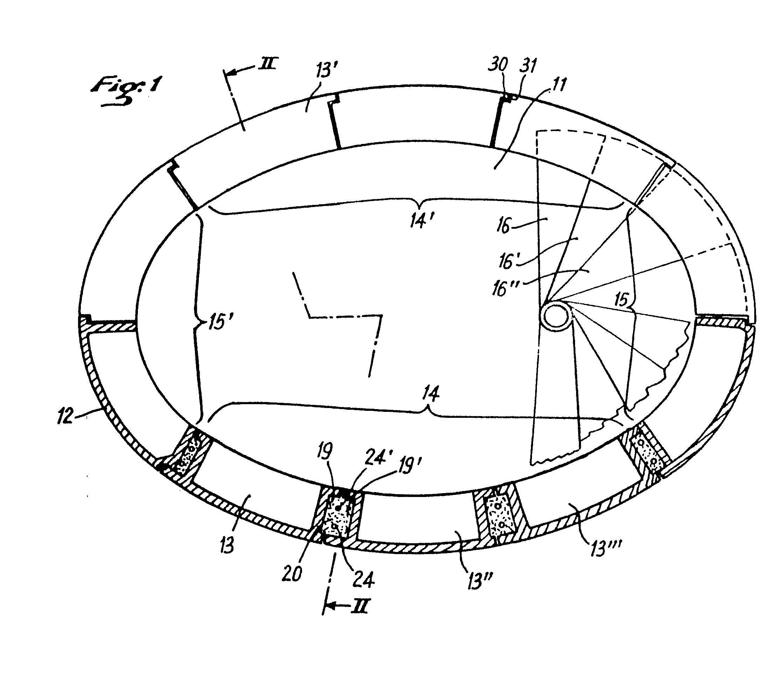

On voit que la paroi latérale 34 du caisson 33, complétée par les ailes débordantes 35 et 35' et la face latérale 34' située en regard et appartenant au caisson 33' définissent une capacité 20' et les capacités 20' superposées d'un étage à l'autre définissent une cheminée dans laquelle peut être coulé, après mise en place d'un ferraillage d'armature, un pilier béton ferraillé, dans les mêmes conditions que celles représentées à la figure 1.

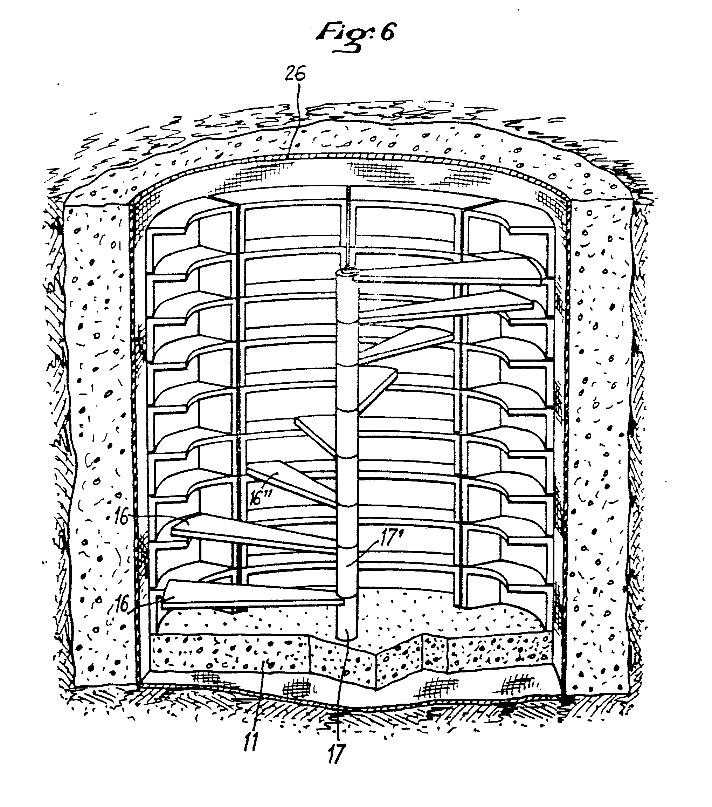

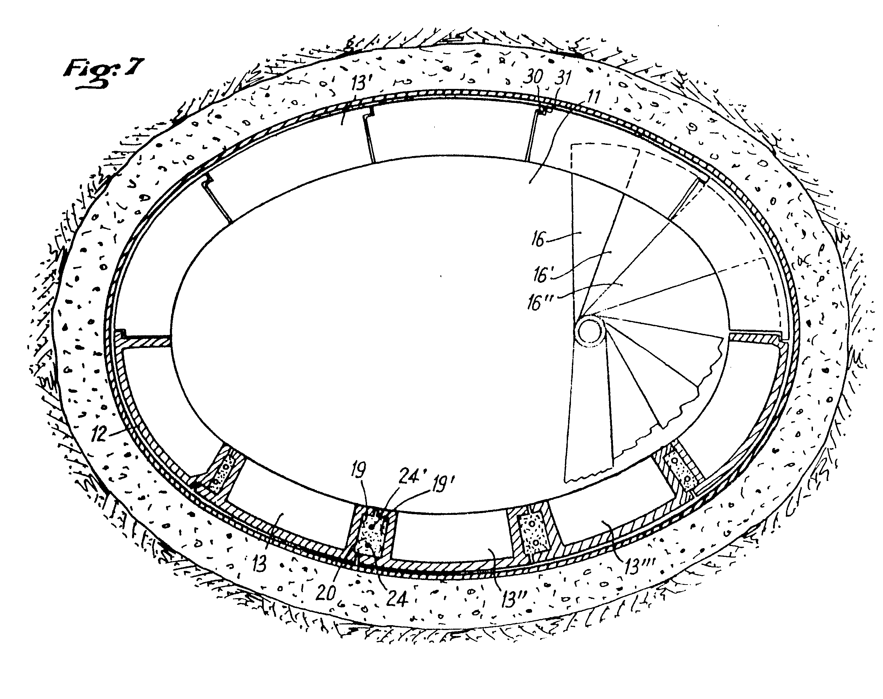

Les figures 6 et 7 illustrent un développement de l'invention dans lequel la structure rigide formée par les casiers assemblés, entourée à l'extérieur de l'enveloppe étanche (26), est entourée et protégée par une masse périphérique extérieure (36) de béton moulé sur place.

A cet effet, l'excavation qui est réalisée au départ est prévue avec des dimensions légèrement supérieures à celles de la paroi extérieure des casiers; et l'ensemble définit ainsi un volume cylindrique à directrice ovoïdale dont les parois sont situées légèrement à l'extérieur par rapport au positionnement prévu pour la paroi des caissons.

Dans le procédé alors mis en oeuvre, on met en place l'enveloppe (26) et l'ensemble des caissons 12, 13, 13' etc... en laissant subsister un intervalle entre la paroi extérieure de la construction et la paroi intérieure de l'excavation.

Lorsque la construction est terminée, il suffit alors de déverser dans l'interstice périphérique entre la feuille d'étanchéité (26) et la paroi de terre, une masse de béton qui est ainsi moulée sur place.

Facultativement, on peut envisager de mettre en place dans l'espace intersticiel périphérique ainsi réalisé des fers d'armature avant de couler le béton.

On obtient dans tous les cas une couronne périphérique en béton qui ajoute à la solidité de l'ensemble ainsi qu'aux caractéristiques de résistance à la pénétration des rayonnements.

Cette réalisation sera ainsi avantageuse si l'on veut obtenir un abri de survie enterré par exemple un abri anti-atomique ou encore un abri permettant la survie à l'occasion de catastrophes naturelles tels que cyclones ou tremblement de terre.

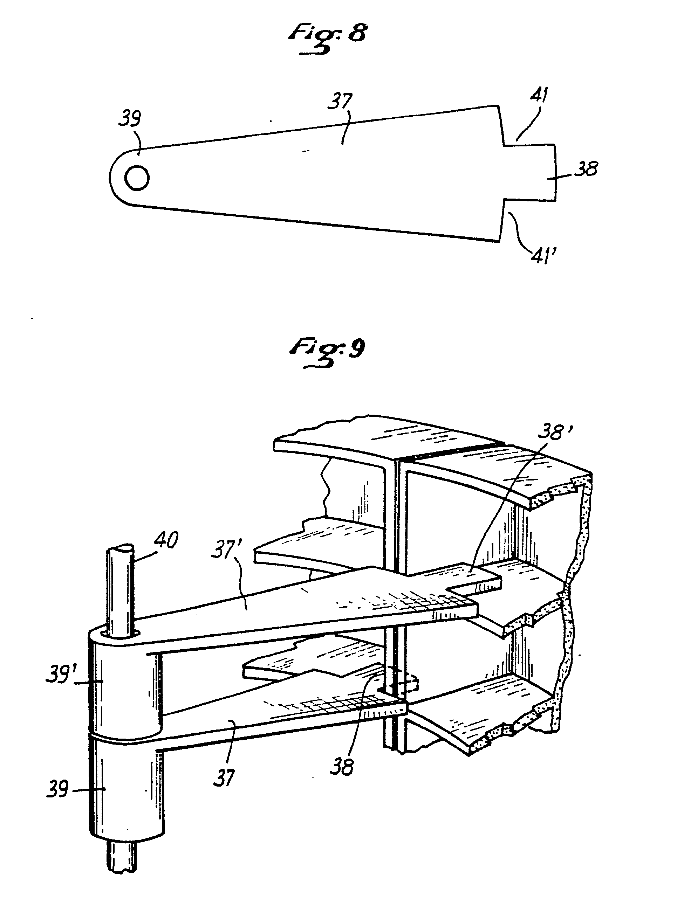

Les figures 8 et 9 illustrent enfin des perfectionnements de détail apportés aux marches utilisées pour la réalisation de l'escalier en colimaçon mis en place pour desservir l'accès à l'abri ovale de l'invention.

L'escalier est réalisé de façon connue en soi à partir de la superposition d'éléments ou marches dont une partie centrale formant manchon (39) est enfilé sur un axe (40) vertical et l'extrémité de la marche repose sur une tablette verticale constituée par le plan horizontal supérieur des caissons ainsi qu'il l'a été exposé précédemment.

Dans la cadre du perfectionnement représenté aux figures 8 et 9, l'élément de marche (37) est prévu, à son extrémité opposée au manchon central (39), avec une excroissance (38) qui forme une surface d'appui sur les tablettes horizontales des caissons; et cette excroissance (38) est de largeur inférieure à la largeur de la marche.

Ainsi qu'on le voit sur la figure 9, cette disposition permet de positionner de façon très souple les marches par rapport aux parois verticales des caissons qui peuvent ainsi venir s'insérer dans les épaulements en creux qui séparent latéralement les excroissances (38) de chacun des bords extérieurs de la marche.

Ainsi qu'on le voit sur la figure (9), les parois verticales peuvent ainsi se positionner successivement d'une marche à l'autre dans un épaulement droit puis dans un épaulement gauche, de sorte que l'on obtient ainsi une superposition parfaitement ajustée des marches.

Selon une autre modalité de mise en oeuvre de l'invention les marches (37), (37') sont simplement enfilées par leur manchon central (39, 39') sur l'axe vertical (40) sans scellement et elles reposent librement par leur extrêmité d'appui (38, 38') sur les tablettes des caissons.

Il est ainsi aisé, de retirer les marches l'une après l'autre et éventuellement de dégager l'axe central (40) (qui est prévu avec une solidarisation amovible inférieure et supérieure), et l'escalier en colimaçon étant ainsi retiré, en peut utiliser la trappe d'accès pour descendre directement (par exemple suspendus par des cordes, tous les éléments encombrants qui sont destinés à être mis en place dans l'abri tels que éléments de mobilier ou appareils (réfrigérateur, chaîne stéréo, télévision, outillage lourd etc...).

On comprend par ailleurs que les casiers peuvent présenter des conformations différentes et par exemple certains casiers peuvent être démunis de tablettes horizontales; ces casiers étant éventuellement superposés pour conformer des niches verticales aptes à recevoir des éléments en hauteur (skis, manches d'outils etc...).

**Revendications**

1. Construction enterrée définissant une enceinte fermée en vue de la protection des biens et/ou de personnes contre les sources d'agression extérieures, la construction étant constituée d'au moins une dalle inférieure constituant l'assise et d'une superposition d'éléments constitués de caissons, lesdits éléments conformant une paroi fermée sur elle-même en forme générale d'un cylindre à base ovale ou elliptique, et la construction est caractérisée en ce que lesdits caissons sont ouverts par leur face orientée vers l'intérieur de l'enceinte en constituant ainsi chacun un casier de rangement et en ce que lesdits caissons sont de deux types, les caissons d'un premier type (12, 12') définissant par leur juxtaposition un pan de paroi courbe de rayon de courbure donnée, et les caissons du second type (13, 13') définissant par leur juxtaposition un pan de paroi courbe comportant un rayon de courbure plus long (par rapport au pan réalisé à partir des caissons du premier type), l'enceinte étant constituée de la juxtaposition de quatre pans soit deux pans de rayon de courbure plus court et deux pans de rayon de courbure plus long, les pans d'un même rayon de courbure étant réalisés avec des caissons d'un même type, étant diamètralement opposés et séparés par deux pans de rayon de courbure différents.

2. Construction selon la revendication 1, caractérisée en outre en ce que certains des caissons (13, 13'), (33, 33') comportent entre leur face latérale (19, 19'), (34, 34') venant en regard une capacité (20, 20') située entre deux caissons juxtaposés, et lesdites capacités se superposent d'un étage à l'autre pour conformer une cheminée (21) de hauteur égale à la hauteur de la construction en constituant un coffrage perdu récepteur d'un pilier (22) de béton armé solidaire de ladite dalle constituant l'assise de la construction.

3. Construction selon l'une des revendications 1 ou 2 ci-dessus, caractérisée en ce qu'elle comporte en outre une dalle (18) supérieure refermant ladite enceinte et formant un plafond en reposant sur les parois verticales, ladite dalle supérieure comportant une solution de continuité située au droit d'un organe d'accès tel qu'un escalier, notamment en colimaçon, disposé à l'intérieur de la construction et permettant d'accéder au volume intérieur de cette dernière.

4. Construction selon la revendication 3, caractérisée en ce que la dalle horizontale inférieure (11) formant l'assise et le plancher de l'enceinte d'une part, les piliers verticaux (22) d'autre part et enfin la dalle supérieure (18) formant le plafond constituent un ensemble monobloc et monolithique, les éléments étant solidarisés entre eux par l'intermédiaire de fers d'armature (23, 24, 24', 25) disposés en attente dans la structure moulée antérieurement et pénétrant dans la structure moulée en second qui lui est voisine.

5. Construction selon l'une des revendications 1 à 4 ci-dessus, caractérisée en ce qu'elle est mise en place dans un local dépendant d'une habitation et la dalle supérieure formant le plafond de ladite construction se prolonge vers l'extérieur pour faire corps avec le plancher du local de l'habitation en dessous duquel se trouve positionnée la construction enterrée.

6. Procédé pour la mise en place d'une enceinte de protection enterrée conformément à l'une des revendications 1 à 5 ci-dessus, caractérisé par la succession des opérations suivantes:

a) on creuse dans le sol une excavation de forme générale cylindrique à directrice ovale,

b) on coule dans le fond de ce volume ainsi creusé après mise en place d'un radier d'armature une chappe en béton constituant le plancher ou l'assise de la construction,

c) on laisse en même temps déborder vers le haut des fers d'attente (23) sur la périphérie de ladite dalle aux endroits convenables et devant constituer la base du coffrage perdu (21) pour l'érection des piliers verticaux (22),

d) on assemble les caissons (12, 12', 13, 13') formant par leur superposition la paroi verticale refermée sur elle-même de l'enceinte et à cet effet on met en place les rangées superposées de caissons, chaque rangée comportant des caissons d'un premier type (12, 12') conformant par leur juxtaposition deux pans de parois de rayons de courbure plus faible et entre lesquelles prennent place les caissons du second type (13, 13', 13'') conformant par leur assemblage deux pans de parois de rayon de courbure plus grand, chaque pan d'un rayon de courbure déterminé étant inséré entre deux autres pans d'un rayon de courbure différent,

e) on dispose, lors de la superposition des caissons de la phase d) précédente, des caissons comportant entre leur face latérale (19, 19', 34, 34') venant en regard, une capacité (20, 20'), lesdites capacités se superposant d'un étage à l'autre pour conformer une cheminée (21) de hauteur égale à la hauteur de la construction en constituant un coffrage perdu, les fers d'attente (23) solidaires de la dalle ou assise (11) ayant été positionnée pour s'engager à la base dudit coffrage,

f) on coule dans ledit coffrage perdu du béton après mise en place de fers d'armature verticaux débordant au sommet dudit coffrage,

g) on met en place un panneau horizontal au niveau du sommet des parois verticales et constituant un coffrage pour la coulée d'une dalle supérieure (18),

h) on coule dans ledit coffrage la dalle constituant le plafond de la construction faisant prise sur les fers d'attente (24, 24') débordant, en laissant une solution de continuité dans la dalle supérieure pour conformer une ouverture d'accès au sein de l'enceinte,

i) on met en place l'organe d'accès constituant un escalier par exemple par superposition des manchons d'extrémité (17, 17'), l'extrémité opposée de chaque marche (16, 16') reposant en appui sur la face horizontale des casiers appartenant au premier pan (15) (de plus faible rayon) et récepteur de la cage d'escalier.

7. Procédé pour la réalisation d'une construction formant enceinte de protection selon la revendication 6 ci-dessus, caractérisé en outre en ce que après la phase de creusement dans le sol d'un volume de forme générale ovoïdale ou elliptique, et avant la coulée de la dalle inférieure et mise en place des casiers, on insère dans le volume creusé une doublure en forme de poche (26) constituée d'une feuille en forme et en matériau étanche, cette poche ayant une forme générale correspondante à celle du volume extérieure de la construction.

8. Procédé pour la réalisation d'une construction selon l'une des revendications 6 ou 7 ci-dessus, caractérisé en outre en ce que l'excavation cylindrique à directrice ovale est prévue avec des dimensions supérieures à celles de la construction, ce qui laisse subsister une couronne périphérique entre la paroi extérieure de la construction et la paroi intérieure de l'excavation, dans laquelle on coule du béton pour constituer une doublure ou paroi de renforcement.

9. Construction selon l'une des revendications 1 à 6 ci-dessus, caractérisée en ce qu'elle est réalisée selon le procédé conforme à la revendication 9 et elle comporte une paroi de renforcement extérieure coulée entre la paroi externe des casiers et la paroi de l'excavation.

10. Construction selon la revendication ci-dessus, caractérisée en ce que elle est pourvue d'un escalier en colimaçon dont chaque marche (37, 37') comporte du côté opposé à un manchon central (31, 39), apte à être enfilé de façon connue sur un axe vertical (40), une excroissance (38, 38') apte à venir en appui sur une tablette formée par une paroi horizontale, l'un des casiers et cette excroissance d'appui est de largeur inférieure à la largeur de la marche en offrant de chaque côté un épaulement en creux (41, 41'), apte à recevoir une paroi verticale des casiers.

**Patentansprüche**

1. Aufbau, der unter der Erde verlegt ist und einen Raum umschließt und durch den Güter und Personen gegen Gewaltanwendung von außen geschützt sind, wobei der Aufbau aus zumindest einer unteren, als Fundament dienenden Platte und einer Übereinanderlagerung von Fächern bildenden Elementen, die eine sich einschließende Wand in allgemein zylindrischer Form auf ovaler oder elliptischer Basis bildet, und dadurch gekennzeichnet ist, daß die Fächer auf der Seite offen sind, die zum Innern des Raumes weist und demnach jeweils ein Zuweisungsfach davon einen Teil bildet, und daß die Fächer zweierlei Ausführung haben, von der die erste (12, 12') durch Nebeneinanderliegen eine gekrümmte Wandfläche bestimmt ist von bekanntem Krümmungsradius und die zweite (13, 13') durch Nebeneinanderliegen eine gekrümmte Wandfläche bestimmt, die einen (gegenüber der Fläche, die ausgehend von den Fächern der ersten Ausführung geschaffen ist) längeren Krümmungsradius aufweist, wobei der Raum gebildet ist aus der Nebeneinanderlagerung von vier Flächen, d.h. zwei Flächen kürzeren Krümmungsradius und zwei Flächen längeren Krümmungsradius, und wobei die Flächen ein und desselben Krümmungsradius mit den Fächern einer Ausführung geschaffen werden, die dabei diametral entgegengesetzt und durch zwei Flächen abweichenden Krümmungsradius getrennt sind.

2. Aufbau nach Anspruch 1, dadurch gekennzeichnet, daß bestimmte Fächer (13, 13'), (33, 33') zwischen ihren Seitenflächen (19, 19'), (34, 34'), die einander gegenüberliegen, ein zwischen den beiden nebeneinanderliegenden Fächern liegendes Volumen (20, 20') aufweist und die Volumina sich von einer Etage zur anderen überlagern, um einen Schacht (21) von einer Höhe zu bilden, die der Höhe des Aufbaus entspricht, indem er eine verlorene Schalung bildet, die einen Ständer oder Pfeiler (22) aus Stahlbeton aufnimmt, der mit der das Fundament des Bauwerks bildenden Platte fest verbunden ist.

3. Aufbau nach einem der vorstehenden Ansprüche 1 oder 2, dadurch gekennzeichnet, daß er darüber hinaus eine obere Platte (18) aufweist, die den Raum umschließt und eine Decke bildet, indem sie auf den senkrechten Wänden ruht, wobei die obere Platte eine offene Stelle aufweist, die senkrecht zu einem Zugangsteil liegt, der eine Treppe, insbesondere eine Wendeltreppe sein kann, die im Innern des Aufbaus angeordnet ist und über die der Zugang zum Innenraum möglich ist.

4. Aufbau nach Anspruch 3, dadurch gekennzeichnet, daß die untere, das Fundament bildende Platte (11) und die Decke des Raums einerseits, die senkrechten Ständer (22) andererseits und schließlich die obere, die Decke bildende Platte (18) bilden eine monolithische Einheit aus einem Stück, wobei die Elemente mittels Armierungseisen (23, 24, 24', 25) miteinander fest verbunden sind, die in Bereitschaft in dem vorher geformten Gefüge angeordnet sind und die in das ihm benachbarte Formgefüge an zweiter Stelle eindringen.

5. Aufbau nach einem der vorhergehenden Ansprüche 1 bis 4, dadurch gekennzeichnet, daß er an einem an eine Wohnung gebundenen Ort errichtet wird und sich die die Decke bildende obere Platte des Aufbaus nach außen hin verlängert, um eine Einheit zu bilden mit dem Boden der Wohnung, unter der sich der in der Erde verlegte Aufbau befindet.

6. Verfahren zum Errichten eines unter der Erde verlegten Schutzraumes nach einem der vorhergehenden Ansprüche 1 bis 6, gekennzeichnet durch die Aufeinanderfolge nachstehender Arbeitsgänge:

a) es wird im Boden ein Aushub von allgemein zylindrischer Form mit ovaler Leitkurve ausgehoben,

b) es wird auf den Boden dieses so geschaffenen Hohlraums nach Einsetzen einer armierten Sohle ein Glattstrich aus Beton gegossen, der den Boden oder das Fundament des Aufbaus bildet,

c) man läßt nach oben gleichzeitig auf der Peripherie der Platte an zweckmäßigen Stellen Bereitschaftseisen (23) überstehen, die die Basis für die verlorene Schalung (21) zum Errichten der senkrechten Ständer (22) bilden müssen,

d) es werden die Fächer (12, 12', 13, 13') zusammengefügt, die durch Übereinanderlagerung die senkrechte sich einschließende Wand des Raums bilden, wozu man übereinandergelagerte Reihen der Felder einsetzt, wobei jede Reihe Fächer einer ersten Ausführung (12, 12') durch ihre Nebeneinanderlagerung zwei Wandflächen oder -fächer mit einem geringeren Krümmungsradius bildet zwischen denen die Fächer der zweiten Ausführung (13, 13', 13'') Platz nehmen, die im Zusammenbau zwei Wandflächen oder -fächer mit einem größeren Krümmungsdurchmesser bilden, wobei jedes Fach eines bestimmten Krümmungsradius zwischen zwei anderen Fächern mit abweichendem Krümmungsradius eingefügt wird,

e) es werden beim Übereinanderlagern der Fächer des vorhergehenden Arbeitsgand d) Fächer eingerichtet, die zwischen ihren gegenüberliegenden Seitenflächen (19, 19', 34, 34') ein Volumen (20, 20') aufweisen, wobei diese Volumina sich von einer Etage zur nächsten übereinanderlagern, um einen Schacht (21) mit einer Höhe, die der Höhe des Aufbaus entspricht, als verlorene Schalung zu bilden, und wobei die mit der Platte oder dem Fundament verbundenen Eisen (23) eingesetzt worden sind, um mit der Basis der Schalung in Eingriff zu kommen,

f) es wird nach dem Einsetzen der vertikalen Armierungseisen, die aus dem Oberteil der Schalung herausragen, Beton in die verlorene Schalung gegossen,

g) es wird auf der Höhe des höchsten Teils der vertikalen Wände eine horizontale tafel in Stellung gebracht, die für den Guß einer oberen Platte (18) eine Schalung vorsieht,

h) es wird in der Schalung die Platte gegossen, die die Decke des Aufbaus bildet, indem sie an den überstehenden Eisen (24, 24') bindet und eine offene Stelle in der oberen Platte beläßt, um eine Zugangsöffnung zum Innern des Raums zu ergeben, und

i) es wird eine Zugangseinrichtung eingesetzt, die als Treppe beispielshalber durch Übereinanderlagerung von Rohrenden (17, 17') ausgebildet sein kann, wobei das jeder Stufe (16, 16') gegenüberliegende Ende aufliegend auf der horizontalen Fläche der Fächer ruht, die dem ersten Fach (15) (mit kleinerem Radius) angehören, der den Treppenraum aufnimmt.

7. Verfahren zur Herstellung des den Schutzraum bildenden Aufbaus nach dem vorhergehenden Anspruch 6, dadurch gekennzeichnet, daß nach dem Arbeitsgang des Bodenaushubs zur Schaffung eines annähernd ei- oder ellipsenförmigen Hohlraums und vor dem Gießen der unteren Platte sowie dem Einsätzen der Fächer in den Hohlraum eine beutelförmige Ausfütterung (26) eingesetzt wird, die aus einer aus dichtendem Material gefertigen Folie besteht, wobei der Beutel eine allgemeine Form hat, die der des Aussenvolumens des Aufbaus entspricht.

8. Verfahren zur Herstellung eines Aufbaus nach einem der vorhergehenden Ansprüche 6 oder 7, dadurch gekennzeichnet, daß die zylindrische Ausschachtung mit ovaler Leitkurve vorgesehen ist mit Maßen, die über denen des Aufbaus liegen, wodurch eine peripherisch Krone zwischen der Aussenwand des Aufbaus und der Innenwand der Ausschachten stehen gelassen wird, in die zur Schaffung einer Ausfütterung oder Verstärkungswand Beton gegossen wird.

9. Aufbau nach einem der vorhergehenden Ansprüche 1 bis 6, dadurch gekennzeichnet, daß er nach dem Verfahren nach Anspruch 8 geschaffen wird und eine äußere Verstärkungswand aufweist, die zwischen der Aussenwand der Fächer und der Wand der Ausschachtung gegossen wird.

10. Aufbau nach dem vorhergehenden Anspruch, dadurch gekennzeichnet, daß er mit einer Wendeltreppe versehen ist, bei der jede Stufe (37, 37') auf der einem Mittelrohr (31, 39), das auf bekannte Art auf einer senkrechten Achse (40) aufgefädelt werden kann, gegenüberliegenden Seite eine Ausstülpung (38, 38') aufweist, die sich an eine kleine, aus einer horizontalen Wand gebildeten Platte anlegt, wobei eines der Fächer und die Ausstülpung eine Breite aufweist, die kleiner ist als die Breite der Stufe und auf jeder Seite eine gehöhlte Schulter (41, 41') bietet, die so ausgebildet ist, daß sie eine vertikale Wand der Fächer aufnimmt.

**Claims**

1. Underground construction defining a closed chamber for protecting goods and/or persons against outside sources of aggression, the construction being constituted by at least one lower slab constituting the foundation and by a superposition of elements constituted by boxes, said elements forming a wall closed on itself generally in the form of a cylinder with oval or elliptic base, and the construction is characterized in that said boxes are open by their face oriented towards the inside of the chamber, each thus constituting a storage bin, and in that said boxes are of two types, the boxes of a first type (12, 12') defining by their juxtaposition a curved wall section of given radius of curvature, and the boxes of the second type (13, 13') define by their juxtaposition a curved wall section comprising a longer radius of curvature (with respect to the section made from the boxes of the first type), the chamber being constituted by the juxtaposition of four sections, viz. two sections of shorter radius of curvature and two sections of longer radius of curvature, the sections of the same radius of curvature being made with boxes of the same type, being diametrically opposite and separated by two sections of different radius of curvature.

2. Construction according to Claim 1, further characterized in that certain of the boxes (13, 13'), (33, 33') comprise between their opposite side faces (19, 19'), (34, 34') a space (20, 20') located between two juxtaposed boxes, and said spaces are superposed from one row to the next to form a shaft (21) of height equal to the height of the construction, constituting a sacrifice shuttering receiving a pillar (22) of reinforced concrete fast with said slab constituting the foundation of the construction.

3. Construction according to one of Claims 1 or 2 hereinabove, characterized in that it further comprises an upper slab (18) enclosing said chamber and forming a ceiling by resting on the vertical walls, said upper slab comprising a gap located level with an access member such as a staircase, particularly in spiral form, disposed inside the construction and allowing access to the inner volume of the latter.

4. Construction according to Claim 3, characterized in that the lower horizontal slab (11) forming the foundation and the floor of the chamber on the one hand, the vertical pillars (22) on the other hand and finally the upper slab (18) forming the ceiling constitute a monobloc and monolithic assembly, the elements being joined together via reinforcing rods (23, 24, 24', 25) disposed in readiness in the previously cast structure and penetrating in the structure adjacent thereto which is cast second.

5. Construction according to one of Claims 1 to 4 hereinabove, characterized in that it is installed in a room depending from a dwelling and the upper slab forming the ceiling of said construction extends outwardly to form part of the flooring of the room of the dwelling beneath which the underground construction is installed.

6. Process for installing an underground protecting chamber according to one of Claims 1 to 5 hereinabove, characterized by the succession of the following operations:

a) an excavation generally cylindrical in form, with oval directrix, in dug in the ground;

b) a concrete covering constituting the floor or foundation of the construction is cast in the bottom of this volume thus dug, after positioning a reinforcing bedplate;

c) at the same time, rods (23) are allowed to project upwardly on the periphery of said slab at appropriate points, in readiness, having to constitute the base of the sacrifice shuttering (21) for the erection of the vertical pillars (22);

d) the boxes (12, 12', 13, 13') forming by their superposition the vertical wall, closed on itself, of the chamber are assembled and, to this end, the superposed rows of boxes are positioned, each row comprising boxes of a first type (12, 12') forming by their juxtaposition two sections of wall of smaller radius of curvature and between which are positioned the boxes of the second type (13, 13', 13'') forming by their assembly two sections of wall of larger radius of curvature, each section of a determined radius of curvature being inserted between two other sections of a different radius of curvature;

e) during superposition of the boxes of preceding phase d), boxes comprising a space (20, 20') between their opposite side faces (19, 19', 34, 34'), are disposed, said spaces being superposed from one row to the next to form a shaft (21) of height equal to the height of the construction, constituting a sacrifice shuttering, the rods (23) in readiness, fast with the slab or foundation (11), having been positioned to engage in the base of said shuttering;

f) concrete is cast into said sacrifice shuttering after positioning of vertical reinforcing rods projecting at the top of said shuttering;

g) a horizontal panel is placed at the top of the vertical walls, constituting a shuttering for the casting of an upper slab (18);

h) the slab constituting the ceiling of the construction is cast in said shuttering, setting on the projecting rods (24, 24') in readiness, leaving a gap in the upper slab to form an opening for access inside the chamber;

i) the access member is positioned, constituting a staircase, for example by superposition of the end sleeves (17, 17'), the opposite end of each step (16, 16') resting in abutment on the horizontal face of the bins belonging to the first section (15) (of smaller radius) and receiving the stair well.

7. Process for making a construction forming protecting chamber according to Claim 6 hereinabove, further characterized in that, after the phase of digging a volume of generally ovoidal or elliptic form in the ground, and before casting the lower slab and positioning the bins, there is inserted in the dug out volume a lining in the form of a bag (26) constituted by a shaped sheet made of water-tight material, the general form of this bag corresponding to that of the outer volume of the construction.

8. Process for making a construction according to one of Claims 6 or 7 hereinabove, characterized in addition in that the cylindrical excavation, of oval directrix, is provided with dimensions greater than those of the construction, this leaving a peripheral ring between the outer wall of the construction and the inner wall of the excavation, into which concrete is cast in order to constitute a lining or reinforcing wall.

9. Construction according to one of Claims 1 to 6 hereinabove, characterized in that it is made in accordance with the process according to Claim 9 and it comprises an outer reinforcing wall cast between the outer wall of the bins and the wall of the excavation.

10. Construction according to Claim hereinabove, characterized in that it is provided with a spiral staircase of which each step (37, 37') comprises, on the side opposite a central sleeve (31, 39), adapted to be fitted in known manner on a vertical shaft (40), a protuberance (38, 38') adapted to come into abutment on a shelf formed by a horizontal wall, one of the bins and this support protuberance is of width smaller than the width of the step, offering on each side a recessed shoulder (41, 41') adapted to receive a vertical wall of the bins.

Fig. 1

0 128 989

*Fig. 2*

## Fig. 3

16″

16′

17′

16

11    17

*Fig:4*

112

112'

112''

113

113'

113''

0 128 989

Fig. 5

## Fig. 6

Fig. 7

0 128 989

*Fig. 8*

*Fig. 9*